# EUROPÄISCHE PATENTSCHRIFT

(11) **EP 3 651 906 B1**
(45) Veröffentlichungstag und Bekanntmachung des Hinweises auf die Patenterteilung: **26.03.2025**
(21) Anmeldenummer: 18748849.9
(22) Anmeldetag: 13.07.2018
(51) Int. Cl.: B01L 3/02, G01N 35/10

(54) **AUTOMATISCHE PIPETTIERVORRICHTUNG FÜR DEN PROBEN- UND/ODER REAGENZIENTRANSFER UND VERFAHREN ZUM TRANSFERIEREN VON FLÜSSIGEN PROBEN UND/ODER REAGENZIEN**
AUTOMATIC PIPETTING DEVICE FOR TRANSFERRING SAMPLES AND/OR REAGENTS AND METHOD FOR TRANSFERRING LIQUID SAMPLES AND/OR REAGENTS
DISPOSITIF DE PIPETAGE AUTOMATIQUE POUR LE TRANSFERT D'ÉCHANTILLONS ET/OU DE RÉACTIFS ET PROCÉDÉ DE TRANSFERT D'ÉCHANTILLONS ET/OU DE RÉACTIFS LIQUIDES

(30) Priorität: 14.07.2017 AT 505932017; 14.07.2017 AT 505952017
(43) Veröffentlichungstag der Anmeldung: 20.05.2020
(73) Patentinhaber: MEON Medical Solutions GmbH & Co KG, 8010 Graz (AT)
(72) Erfinder: LIMBACH, Berthold, 4932 Lotzwil (CH); SPRENGERS, Wolfgang, 8081 Vasoldsberg (AT)
(74) Vertreter: Babeluk Patentanwälte GmbH
(86) Internationale Anmeldenummer: PCT/AT2018/060148
(87) Internationale Veröffentlichungsnummer: WO 2019/010515

(56) Entgegenhaltungen:
- EP-A1- 0 601 213
- WO-A1-2011/119441
- DE-A1- 102005 049 920
- DE-A1- 102012 216 544

## Beschreibung

Die Erfindung betrifft eine automatische Pipettiervorrichtung geeignet für den Proben- und/oder Reagenzientransfer aus Proben- und/oder Reagenziengefäßen in zumindest ein Aufnahmegefäß, beispielsweise eines Analysators der zur Analyse von flüssigen Proben bestimmt ist, wobei ein beweglicher Pipettor der Pipettiervorrichtung entlang einer x-Richtung verfahrbar ausgeführt ist und zumindest eine erste Pipettiernadel aufweist, die längs eines horizontalen Arms des Pipettors entlang einer auf die x-Richtung im Wesentlichen normal stehenden y-Richtung verfahrbar und in die einzelnen Gefäße in z-Richtung absenkbar ausgeführt ist. Weiters betrifft die Erfindung ein Verfahren zum Transferieren von flüssigen Proben und/oder Reagenzien aus Proben- und/oder Reagenziengefäßen in zumindest ein Aufnahmegefäß einer automatischen Pipettiervorrichtung.

Aus dem Stand der Technik sind Pipettierautomaten bzw. Pipettiervorrichtungen für den Transfer definierter Flüssigkeitsmengen zwischen verschiedenen, auf einer Oberfläche rasterförmig verteilten Flüssigkeitsgefäßen bekannt. Beispielsweise kann eine Behandlung von physikalischen, chemischen oder biologischen Flüssigproben mit bestimmten Reagenzien oder Verdünnungsflüssigkeiten im Rahmen einer Probenvorbereitung für die in einem Analysegerät durchgeführte Messung chemisch-physikalischer Parameter erfolgen. Diese Automaten verfügen über ein oder mehrere Pipettiereinheiten mit einer zugehörigen Pipettiernadel zur Flüssigkeitsabgabe und -aufnahme, welche relativ zur Oberfläche auf der sich die Flüssigkeitsgefäße befinden, in ein oder mehreren horizontalen Richtungen verfahrbar sowie in die Flüssigkeitsbehälter absenkbar sind. Zusätzlich werden Nadelwascheinrichtungen benötigt, um eine Verschleppung von an den Nadeln anhaftenden flüssigen Substanzresten in andere Gefäße zu verhindern. Neben einer präzisen Flüssigkeitsdosierung zielt die Konstruktion der Pipettierautomaten stets auf das Erreichen einer möglichst großen Anzahl an Pipettieroperationen pro Zeiteinheit (hoher Durchsatz) ab.

Zum besseren Verständnis der Erfindung werden einige wesentliche, in der gegenständlichen Anmeldung verwendete, technische Begriffe näher definiert:

### Pipettiereinheit:

Bezeichnet das Gesamtsystem einer automatischen Pipettiervorrichtung zum Flüssigkeitstransfer zwischen verschiedenen Gefäßen, welches einen oder mehrere bewegliche Pipettoren samt aller für deren Funktion notwendigen mobilen und stationären Komponenten, inklusive zuführender Fluidik (Schlauchverbindungen, Pumpen, Ventile, Behälter, etc.), Sensorik, Steuerung und Stromversorgung umfasst.

### Pipettor:

Beschreibt eine in Bezug auf die Aufnahmegefäße Probengefäße, Reagenziengefäße, Reaktionsgefäße oder Küvetten horizontal in mindestens einer Richtung linear bewegliche oder schwenkbare Komponente der Pipettiereinheit. Der Pipettor beinhaltet eine Aufhängungskomponente mit mindestens einer Pipettiernadel, welche allein oder gemeinsam mit dem Pipettor beweglich in die genannten Gefäße absenkbar ausgeführt ist.

### Pipettiernadel:

Bezeichnet eine, am Pipettor angebrachte Kanüle bzw. Hohlnadel samt deren Halterung mit Anschlusselementen für die Fluidik zum Aufsaugen von Proben aus den Probengefäßen und/oder zum Aufsaugen von Reagenzien aus den Reagenziengefäßen sowie zur dosierten Abgabe der aufgesaugten Flüssigkeiten in die Aufnahmegefäße bzw. Küvetten.

### Reagenziengefäß:

Gefäß bzw. Behälter zur Aufnahme von Reagenzien, die für die Durchführung der Analyse benötigt werden.

### Probengefäß:

Gefäß bzw. Behälter, welches bzw. welcher im Analysator die Analysenprobe enthält, aus welchem für die Analyse einzelner Analyte oder Parameter mehrfach kleinere Probenmengen (Aliquote) entnommen werden können. Die Analyse erfolgt hierbei nicht im Gefäß der Analysenprobe, sondern nach Zugabe der Reagenzien in der Küvette, welche in diesem Sinne als Reaktionsgefäß dient.

Aus der EP 1 230 553 B1 (MAXMAT) ist in diesem Zusammenhang ein chemischer oder biologischer Analysator bekannt, der ein Lagermodul für Probenröhrchen und Röhrchen für Reagenzien aufweist. Weiterhin ist ein Analysemodul mit einem Reaktionsbehälter in Form einer Mikrotiterplatte, sowie ein auf einer Schiene verfahrbares Entnahmemodul (Pipettor) mit zwei in einem fixen Abstand zueinander angeordneten Pipettiernadeln vorgesehen, die zur automatischen Probenentnahme unabhängig voneinander in z-Richtung arbeiten und jeweils mit einer einziehbaren Ansaugpipette zum Übertragen vorbestimmter Mengen von Proben und Reagenzien vom Lagermodul zum Analysemodul ausgestattet sind. In der horizontalen x- /y-Ebene sind die beiden Pipettiernadeln nur gemeinsam verfahrbar.

Das Analysenmodul weist eine Heizplatte für die Mikrotiterplatte auf, die nahe dem unteren Bereich der Vertiefungen (Wells) der Mikrotiterplatte angeordnet ist, um den Inhalt der Wells durch Konvektion zu erwärmen. Die Entnahmeeinheit umfasst ferner eine Mischvorrichtung, die von einem Elektromagneten gesteuert wird, um eine abwechselnde Hin- und Herbewegung der Pipettiernadel zu bewirken, wenn sich diese in abgesenkter Stellung in einem Well der Mikrotiterplatte befindet, um das Gemisch aus Proben und Reagenzien zu durchmischen.

Weiterhin ist aus der EP 2 410 342 A2 (HOFFMANN-LA ROCHE) eine Pipettiervorrichtung bekannt, die einen Pipettor mit mehreren, flach bauenden, nebeneinander angeordneten Rahmenelementen aufweist, welche mit deren Pipettiernadeln auf einem Hauptrahmenkörper gemeinsam in einer horizontalen, normal auf den Hauptrahmenkörper stehenden x-Richtung beweglich sind. Die Pipettiervorrichtung dient dazu, um Proben oder Reagenzien von einer ersten Reihe von Gefäßen zu einer in x-Richtung versetzten zweiten Reihe von Gefäßen zu transferieren. Die Pipettiernadeln werden zunächst in y-Richtung auf den Abstand der Gefäße der ersten Reihe justiert, um Proben- oder Reagenzflüssigkeit aufzunehmen und danach - zur Abgabe der Proben- oder Reagenzflüssigkeit - an den Abstand der zweiten Reihe von Gefäßen angepasst. Eine unabhängige Bewegung zweier Pipettiernadeln in x- und y-Richtung ist jedoch nicht vorgesehen. Verfahrmodule für die y-Richtung und die z-Richtung (Heben und Senken der Pipettiernadeln) sind in flachen, benachbarten Rahmenelementen auf Lücke angeordnet, um den Abstand der einzelnen Pipettiernadeln zueinander gering zu halten. Eine unabhängige Bewegung der Pipettiernadeln in y-Richtung ist jedoch nur begrenzt möglich. So ist beispielsweise ein aneinander Vorbeifahren der Rahmenelemente auf dem Transferarm nicht möglich, woraus eine gegenseitige Einschränkung der y-Bewegungsfreiheit der Pipettiernadeln resultiert. Eine sinnvolle Anwendung finden derartige Pipettiervorrichtungen vor allem im Zusammenhang mit Mikrotiterplatten.

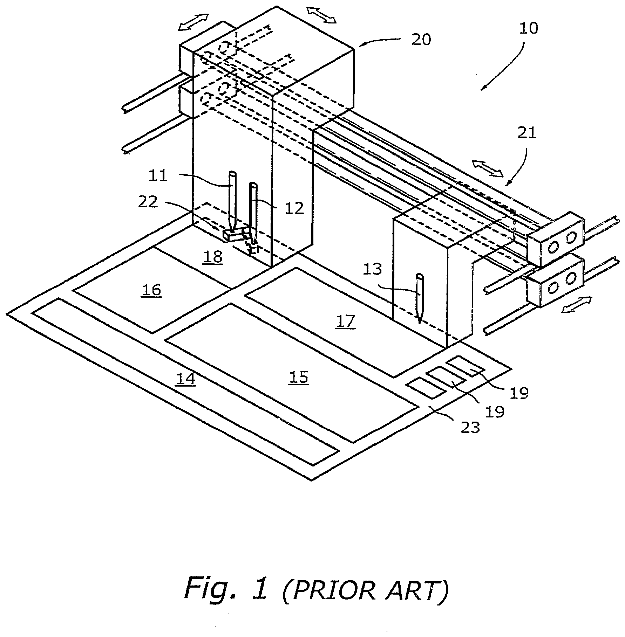

Schließlich beschreibt die US 5,897,837 A (TOA MEDICAL) eine automatische Pipettiervorrichtung bzw. einen Pipettierautomaten für die Probenvorbehandlung eines Immunoassay-Analysators. Wie in Fig. 1 der gegenständlichen Anmeldung gezeigt, weist der Pipettierautomat 10 einen ersten, horizontal in x- und y-Richtung verfahrbaren Pipettor 20 auf, welcher mit zwei Pipettiernadeln 11 und 12 ausgestattet ist, die unabhängig voneinander vertikal abgesenkt oder angehoben werden können. Hierbei können einer der beiden Nadeln 11 Reagenzien zugeordnet sein, während der anderen Nadel 12 Proben zugeordnet sind, die in unterschiedlichen Sektionen 14 bis 19 einer Tischebene 23 angeordnet sind. Zusätzlich ist auch ein zweiter, in x-y Richtung verfahrbarer Pipettor 21 mit einer absenkbarer Pipettiernadel 13 vorhanden.

Der erste, horizontal verfahrbare Pipettor 20 führt eine Nadelwascheinheit 22 mit, welche zwischen den vertikalen Absenkpfaden der beiden Pipettiernadeln 11, 12 horizontal hin- und her bewegbar ist. Hierbei kann abwechselnd jeweils eine der beiden Nadeln gereinigt werden, während die andere Nadel einen Pipettiervorgang ausführt. Die beiden Pipettiernadeln 11, 12 des ersten Pipettors 20 können nur gemeinsam in x- oder y-Richtung bewegt werden.

Dies hat den Nachteil, dass die Massen der Robotik-Komponenten des Pipettors 20 nicht auf die beiden horizontalen Verfahrachsen x und y aufgeteilt werden können, sodass für das Anfahren von Positionen in y-Richtung die Masse der zweiten Pipettiereinheit stets mitbeschleunigt werden muss. Ebenso muss auch die Masse der Nadelwascheinheit 22 samt Nadelwaschgefäß in beiden horizontalen Richtungen stets mitbeschleunigt werden. Weiters ist es aufgrund der gemeinsamen horizontalen Bewegung beispielsweise nicht möglich, beide Nadeln 11, 12 gleichzeitig für Pipettierungen an unterschiedlichen, in x-Richtung nicht benachbarten Gefäßreihen einzusetzen.

Aus der WO 2011/119441 A1 (BIONEX SOLUTIONS) ist eine Transfer- und Prüfvorrichtung für Materialien bekannt geworden, die mit unabhängig voneinander bewegbaren Träger- und Empfängervorrichtungen ausgestattet ist. Die in X-und Z-Richtung bewegbaren Trägereinrichtungen, die Hohlnadeln aufweisen, sind an der Unterseite hängend an einer stationären Balkenkonstruktion angeordnet, die an beiden Enden der Vorrichtung abgestützt ist. Die Empfängervorrichtungen sind in Y-Richtung verfahrbar und in der X/Y-Ebene drehbar angeordnet und sind beispielsweise mit Microplates ausgestattet, in deren Vertiefungen (Wells) Probenmaterialen transferiert werden können. Durch die kombinierte translatorische und rotatorische Bewegung der Träger- und Empfängervorrichtungen können die Verfahrwege minimiert werden.

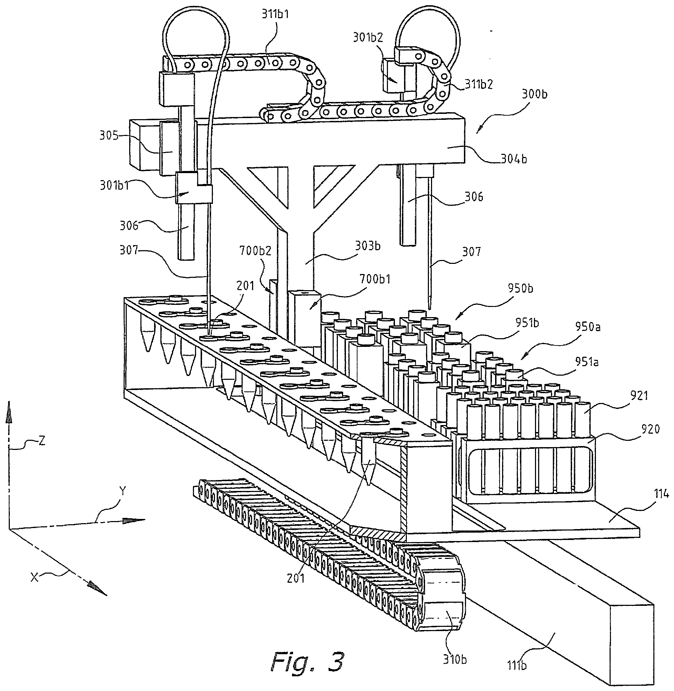

Die DE 10 2005 049 920 A1 (MANZ AUTOMATION) zeigt eine Roboteranordnung für den Biowissenschaftsbereich, umfassend zumindest ein erstes Robotermodul mit einem X-Achsenarm, an dem zumindest ein horizontal ausgerichteter Y-Achsenarm in x-Richtung bewegbar angeordnet ist. An dem Y-Achsenarm ist eine in y-Richtung bewegbare Ankoppeleinrichtung zum Ankoppeln eines Pipettiermoduls vorgesehen. Gemäß einer Variante, dargestellt in Fig. 3, können mehrere gleichartige Robotermodule in x-Richtung aneinandergereiht werden, wobei ein ersten in x-Richtung beweglichen Arm mit einem in y-Richtung beweglichen Pipettiermodul bestückt ist und ein zweiter derartiger Arm eine Greifeinrichtung aufweist.

In der EP 0 601 213 A1 (HAMILTON BONADUZ) wird ein alternatives Konzept zur Erzielung einer x, y, z-Beweglichkeit von zwei Pipettoren vorgestellt. Die Pipettoren sind mittels dreier Magnetglieder an der Unterseite einer über einer Anordnung von Proben- und Reagenziengefäßen auskragenden Trägerplatte aufgehängt und stützen sich an drei Lagerkörpern in Form von Kugeln an der Trägerplatte ab. Die x/y-Bewegung erfolgt über eine elektromotorisch angetriebene, zentrale Kugel des jeweiligen Pipettors.

Aufgabe der Erfindung ist es, die durchschnittliche Dauer von Pipettiervorgängen in einem Pipettierautomaten bzw. einer Pipettiervorrichtung deutlich zu verkürzen, und somit einen größtmöglichen Durchsatz, insbesondere bei Pipettieraufgaben zu erreichen, bei welchen die Art und Menge der dispensierten Reagenzien und Proben zwischen einzelnen Pipettieroperationen ständig wechselt.

Diese Aufgabe wird erfindungsgemäß dadurch gelöst, dass der horizontale Arm des verfahrbaren Pipettors an einem vertikalen Turm befestigt ist, der mittels einer verfahrbaren Aufnahme an einer in x-Richtung verlaufenden Schiene verfahrbar befestigt ist, wobei der horizontale Arm zumindest eine zweite Pipettiernadel aufweist, die unabhängig von der aktuellen Stellung der ersten Pipettiernadel aneinander vorbei verfahrbar und in die einzelnen Gefäße absenkbar ausgeführt ist und wobei die beiden unabhängig voneinander verfahrbaren Pipettiernadeln an gegenüber liegenden Längsseiten bzw. Seitenflächen des Arms des Pipettors angeordnet sind.

Der am Arm des Pipettors für jede Pipettiernadel zur Verfügung stehende Verfahrweg kann somit - unabhängig von der Stellung des jeweils anderen Pipettors - zur Gänze genutzt werden.

Das erfindungsgemäße Verfahren zum Transferieren von flüssigen Proben und/oder Reagenzien aus Proben- und/oder Reagenziengefäßen in zumindest ein Aufnahmegefäß einer automatischen Pipettiervorrichtung, mit einem entlang einer ersten Richtung horizontal verfahrbaren Pipettor, zeichnet sich durch folgende Schritte aus:
- Verfahren einer ersten Pipettiernadel des Pipettors entlang einer horizontalen, auf die erste Richtung im Wesentlichen normal stehenden zweiten Richtung zum Transferieren einer vorbestimmten Menge einer flüssigen Probe oder Reagenz aus einem Proben- oder Reagenziengefäß in das Aufnahmegefäß;
- Absenken der ersten Pipettiernadel in das Proben- oder Reagenziengefäß,
- Aufnehmen einer vorbestimmten Menge an Proben- oder Reagenzflüssigkeit und Verfahren der ersten Pipettiernadel zur Position des Aufnahmegefäßes;
- Abgabe der vorbestimmten Menge an Proben- oder Reagenzflüssigkeit in das Aufnahmegefäß; und
- Verfahren einer zweiten Pipettiernadel desselben Pipettors in die zweite Richtung, unabhängig von der aktuellen Stellung bzw. Position der ersten Pipettiernadel zur gleichzeitigen Durchführung zusätzlicher Pipettieraufgaben.

Eine Durchsatzsteigerung ergibt sich somit dadurch, dass die beiden Pipettiernadel ungehindert aneinander vorbeifahren können, wobei die erste Pipettiernadel z.B. Proben pipettieren kann, während die zweite Pipettiernadel gleichzeitig und unabhängig von der ersten Pipettiernadel Reagenzien pipettieren kann, bzw. es kann auch eine zweite Proben- oder Reagenzienart pipettiert werden. Ferner kann eine Probe auf die zwei Pipettiernadeln aufgeteilt werden und anschließend gleichzeitig in zwei verschiedene, in y-Richtung frei wählbare, nicht benachbarte Gefäße pipettiert werden.

Eine Ausführungsvariante der Erfindung sieht vor, dass der Pipettor der Pipettiervorrichtung unterschiedliche Pipettiernadeln aufweist, wobei die Pipettiernadeln jeweils Hohlnadeln bzw. Kanülen aufweisen, die sich in der Art der verwendeten Materialien, den Innenvolumina und/oder der Geometrie der Hohlnadeln bzw. Kanülen unterscheiden.

Für bestimmte Pipettieraufgaben, bei welchen zwei unterschiedliche Typen von Pipettiernadeln zum Einsatz kommen müssen, kann es von Vorteil sein, dass zwei unterschiedliche Pipettiernadeln auf ein und demselben Pipettor zum Einsatz kommen. Beispielsweise kann eine der am Pipettor angebrachten Pipettiernadeln zur Erhöhung der Präzision ein besonders kleines Innenvolumen der Hohlnadel im µL-Bereich aufweisen, während die zweite Hohlnadel zur Abgabe größerer Volumina ein entsprechend größeres Innenvolumen aufweist. In einer weiteren erfindungsgemäßen Ausführungsweise kann eine der Hohlnadeln wenigstens zum Teil aus einem anderen Material gefertigt sein (beispielsweise aus einer korrosionsfesten Legierung, Kunststoff oder Stahl), oder beispielsweise zur Steuerung der Benetzung an der Innen- und/oder Außenseite der Hohlnadel mit hydrophoben oder hydrophilen Stoffen beschichtet sein. Die Nadeln können sich auch durch andere, nicht notwendigerweise ausschließlich medienberührende Oberflächen betreffende Modifikationen unterscheiden, wie z.B. leitfähige Nadelbestandteile, Sensoren, Heiz- oder Kühlvorrichtungen, welche Teil der Hohlnadel sind oder in Kontakt mit der Hohlnadel stehen. Die zweite Nadel kann sich aber auch in ihrer Geometrie unterscheiden, z.B. kann sie einen anderen Spitzenwinkel aufweisen, um die Ablösung von Tropfen zu erleichtern, oder eine andere Länge, bzw. einen anderen Durchmesser aufweisen, um die Nadel an die jeweiligen Pipettieraufgaben besser anzupassen.

Somit können durch den Einsatz unterschiedlicher, in y-Richtung unabhängig verfahrbarer Pipettiernadeln auf ein- und demselben Pipettor unterschiedlichste Pipettieraufgaben ermöglicht werden, ohne dass ein zusätzlicher Pipettor oder eine Nadelaustauschstation benötigt werden. Ferner ist im Gegensatz zum Einsatz eines zweiten Pipettors eine Kollision zweier Pipettiernadeln im Betrieb nicht möglich, wodurch die Verfahrwege und die Steuerung der Pipettiervorrichtung vereinfacht werden.

Unabhängig von der Art der Pipettieraufgabe ergibt sich eine weitere Durchsatzsteigerung dann, wenn der Pipettor der Pipettiervorrichtung zumindest eine mit dem Pipettor verfahrbare Nadelwascheinheit für die erste und die zweite Pipettiernadel aufweist. Beispielsweise kann mit einer Pipettiernadel ein Pipettiervorgang durchgeführt werden, während zeitgleich die zweite Pipettiernadel gereinigt wird. Die Konfiguration des Pipettors zeichnet sich dadurch aus, dass die y-Bewegung der jeweiligen Pipettiernadel ohne eine Mitbewegung der Masse der am Pipettor mitgeführten Nadelwascheinheit möglich ist, wodurch die beiden Pipettiernadeln in y-Richtung wesentlich schneller beschleunigt und abgebremst werden können.

Besonders vorteilhaft ist es, für jede der beiden Pipettiernadeln eine separate Nadelwascheinheit mitzuführen.

Gemäß einer weiteren bevorzugten Ausführung des Pipettors werden die erste und die zweite Pipettiernadel zumindest in Teilbereichen des Arms des Pipettors im Wesentlichen parallel zueinander verfahrbar ausgeführt. Diese Konfiguration hat den Vorteil einer höheren Präzision beim Anfahren eines in der Horizontalen befindlichen Haltepunktes (z.B. einem Flüssigkeitsgefäß), da die an der seitlichen Oberfläche des z.B. aus Blech- oder Metallprofilen bestehenden Pipettorarms befestigten Führungsschienen der Pipettiernadeln besser ausgerichtet und gestützt werden können. Ferner wirken die Führungsschienen wie Verstrebungselemente, und wirken sich über eine Erhöhung der Steifigkeit des Pipettorarms vorteilhaft auf die Beschleunigungsfähigkeit des Pipettors in x-Richtung aus.

Da die beiden unabhängig voneinander verfahrbaren Pipettiernadeln an gegenüber liegenden Längsseiten bzw. Seitenflächen des Arms des Pipettors angeordnet sind, wird eine ungehinderte Bewegung der Pipettiernadeln über die ganze Länge des Arms und der Arbeitsfläche ermöglicht. Weiters erhöht sich die Steifigkeit des Arms, wodurch dieser dünner und leichter ausgeführt werden kann.

Weitere Vorteile der seitlichen Anbringung der beiden Pipettiernadel bestehen darin, dass die automatische Pipettiervorrichtung kompakter ausgeführt sein kann und deren Breite die Gesamtlänge des horizontalen Arms nicht überschreitet. Weiters können die für die Versorgung der Pipettiernadeln erforderlichen Energieketten problemlos an der Oberseite des Arms geführt werden, wobei auch den Schlauchleitungen der Fluidik mehr Platz zur Verfügung steht, insbesondere wenn diese bei einer Hubbewegung der Pipettiernadeln ungehindert Bewegungsschlaufen nach oben ausbilden können.

Gemäß einer Ausführungsvariante der Erfindung sind an zumindest einer Seite des Arms des Pipettors zwei gemeinsam verfahrbare Pipettiernadeln derart über einen Hubmechanismus verbunden, dass die beiden Pipettiernadeln in z-Richtung gegenläufig bzw. antiparallel bewegbar sind.

Da der horizontale Arm des Pipettors an einem vertikalen Turm befestigt ist, der an einer in x-Richtung verlaufenden Schiene verfahrbar befestigt ist, kann die in x-Richtung verlaufende Schiene beispielsweise an den quer dazu verlaufenden Trägern einer Arbeitsfläche der Pipettiervorrichtung befestigt werden, wodurch im Vergleich zu einer bekannten Portalaufhängung die Toleranzen der Pipettoraufhängung klein gehalten werden können. Weiters sind durch diese Konfiguration kurze Schlauch- und Versorgungsleitungen zum in x-Richtung verfahrenden Pipettor möglich, was sich vorteilhaft auf die Pipettiergenauigkeit, sowie die zu bewegende Gesamtmasse des Pipettors auswirkt.

Entsprechend einer weiteren vorteilhaften Ausführung der Pipettiervorrichtung weist der Pipettor mit seinem vertikalen Turm und dem horizontalen Arm eine im Wesentlichen L-förmige Grundstruktur auf, wodurch einerseits die Arbeitsfläche nicht durch die Breite der in x-Richtung verlaufende Schiene des Pipettors durchbrochen wird, und somit andererseits ein Teil der Verfahrwege in y-Richtung beträchtlich verkürzt wird.

Die Beschleunigungsfähigkeit des Pipettors in x-Richtung kann durch eine weitere Ausführungsvariante beträchtlich gesteigert werden, wenn der Pipettor mit seinem vertikalen Turm und dem horizontalen Arm eine im Wesentlichen T-förmige Grundstruktur aufweist. Dies fügt der Grundstruktur des Pipettors eine weitere Symmetrieebene hinzu, und ermöglicht eine weitere Steigerung der Steifigkeit des Pipettors. Der Turm und der Arm des Pipettors können in weiter verringerter Materialstärke eine verringerte Masse aufweisen, und der Pipettor kann somit besser beschleunigt und abgebremst werden.

Die Erfindung wird im Folgenden an Hand von zum Teil schematischen Ausführungsbeispielen näher erläutert. Es zeigen:
- Fig. 1: eine automatische Pipettiervorrichtung für den Proben- und Reagenzientransfer gemäß Stand der Technik in einer dreidimensionalen Ansicht,
- Fig. 2: eine erfindungsgemäße automatische Pipettiervorrichtung für den Proben- und Reagenzientransfer in einer dreidimensionalen Ansicht,
- Fig. 3: eine Variante der erfindungsgemäßen automatischen Pipettiervorrichtung gemäß Fig. 2,
- Fig. 4: eine Nadelwascheinheit der automatische Pipettiervorrichtung gemäß Fig. 2 und 3 in einer vergrößerten Schnittdarstellung,
- Fig. 5: Fluidikelemente einer Pipettiernadel eines Pipettors gemäß Fig. 2 oder 3 in einer schematischen Darstellung,
- Fig. 6: Fluidikelemente der Nadelwascheinheit gemäß Fig. 4 in einer schematischen Darstellung, sowie
- Fig.7: ein Detail einer Ausführungsvariante der erfindungsgemäßen automatische Pipettiervorrichtung gemäß Fig. 2.

Funktionsgleiche Teile sind in den Ausführungsvarianten mit gleichen Bezugszeichen versehen.

Die in Fig. 1 dargestellte automatische Pipettiervorrichtung wird bereits in der Beschreibungseinleitung (siehe US 5,897,837 A) ausführlich beschrieben.

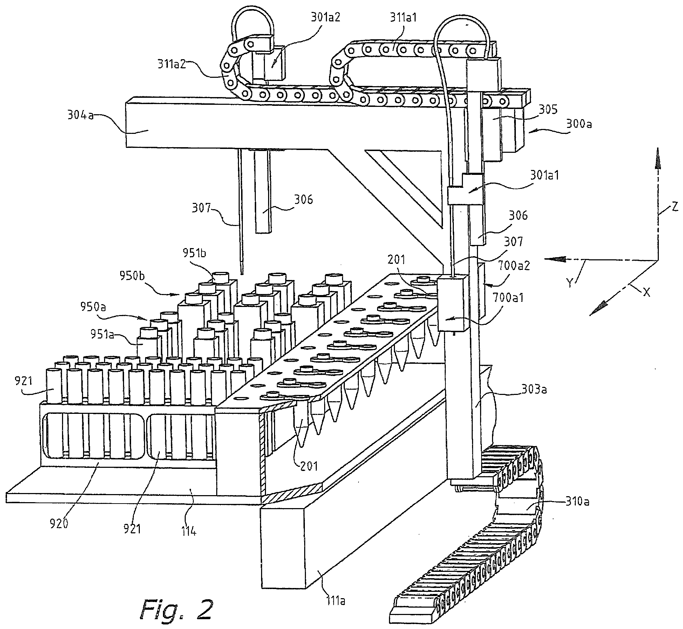

Die in Fig. 2 dargestellte, erfindungsgemäße Pipettiervorrichtung dient für den Probentransfer aus Probengefäßen 921, die in einem Probenlager 920 auf einer Tischoberfläche 114 vorliegen, sowie für den Reagenzientransfer aus unterschiedlichen Reagenziengefäßen 951a, 951b, die in Reagenzienlagern 950a, 950b vorliegen, in zumindest ein Aufnahmegefäß 201, beispielsweise ein Reaktionsgefäß oder eine Küvette eines Analysators zur Analyse von flüssigen Proben oder eine Mikrotiterplatte. Mehrere Aufnahmegefäße 201 können in einer Reihe als lineares Array angeordnet sein, oder auch als 2D Array, beispielsweise in Form einer Mikrotiterplatte.

Ein beweglicher Pipettor 300a der Pipettiervorrichtung ist entlang einer ersten Richtung (x-Richtung) horizontal verfahrbar ausgeführt und weist eine erste Pipettiernadel 301a1 mit einer Kanüle bzw. Hohlnadel 307 auf, die längs eines Arms 304a des Pipettors 300a entlang einer auf die x-Richtung im Wesentlichen normal stehenden zweiten Richtung (y-Richtung) horizontal verfahrbar und in die einzelnen Gefäße in z-Richtung vertikal absenkbar ausgeführt ist. Der Arm 304a des verfahrbaren Pipettors 300a weist erfindungsgemäß eine zweite Pipettiernadel 301a2 mit einer Kanüle bzw. Hohlnadel 307 auf, die unabhängig von der aktuellen Stellung der ersten Pipettiernadel 301a1 in y-Richtung verfahrbar ausgeführt ist und in die einzelnen Gefäße 921, 951a, 951b und 201 abgesenkt werden kann. Dabei kann die zweite Pipettiernadel 301a2 ungehindert an der ersten Pipettiernadel 301a1 vorbeifahren, sodass beiden Pipettiernadeln jederzeit der gesamte Verfahrweg längs des Arms 304a zur Verfügung steht.

Zur Vereinfachung der Darstellung in Fig. 2 sind nur jene Komponenten der automatischen Pipettiervorrichtung dargestellt, die für die Erfindung wesentlich sind, wobei auf weitere Komponenten der Pipettiervorrichtung, wie Pumpen, Ventile, Steuer- und Antriebseinheiten, die bevorzugt unterhalb der parallel zur x/y-Ebene ausgerichteten Tischoberfläche 114 angeordnet sind, hier nicht näher eingegangen wird.

Der Pipettor 300a der Pipettiervorrichtung weist im dargestellten Beispiel zwei mit dem Pipettor 300a verfahrbare Nadelwascheinheiten 700a1, 700a2 auf, jeweils eine für die Hohlnadel 307 der ersten Pipettiernadel 301a1 und der zweiten Pipettiernadel 301a2.

Die erste und die zweite Pipettiernadel 301a1, 301a2 sind zumindest in Teilbereichen, bevorzugt in allen Bereichen, des Arms 304a des Pipettor 300a im Wesentlichen parallel zueinander verfahrbar ausgeführt, wobei die beiden Pipettiernadeln bevorzugt an gegenüberliegenden Längsseiten des Arms 304a des Pipettors 300a angeordnet sind.

In der Ausführungsvariante gemäß Fig. 2 weist der Pipettor 300a mit seinem vertikalen Turm 303a und dem horizontalen Arm 304a eine im Wesentlichen L-förmige Grundstruktur auf, wobei der Pipettor seitlich an der Anordnung der einzelnen Gefäße 921, 951a, 951b, 201 des Probenlagers 920, der beiden Reagenzienlager 950a, 950b und der Anordnung der Aufnahmegefäße 201 verfahrbar ist.

Für die Nachführung von Fluidikleitungen und allfälliger elektrischer Versorgungs- und Signalleitungen in y-Richtung weisen die beiden Pipettiernadeln 301a1, 301a2 abrollbare Energieketten 311a1, 311a2 auf. Für die Nachführung in x-Richtung ist für diese Zwecke eine abrollbare Energiekette 310a vorgesehen.

In Fig. 3 ist als Ausführungsvariante der erfindungsgemäßen Pipettiervorrichtung ein verfahrbarer Pipettor 300b dargestellt, der mit seinem vertikalen Turm 303b und dem horizontalen Arm 304b eine im Wesentlichen T-förmige Grundstruktur aufweist, sodass hier zu beiden Seiten des Turms 303b Gefäße 921, 951a, 951b, 201 angeordnet sein können. Auch dieser Pipettor 300b weist zwei unabhängig voneinander in y- Richtung verfahrbare Pipettiernadeln 301b1, 301b2 auf, sowie jeweils mit dem Pipettor 300b verfahrbare Nadelwascheinheiten 700b1, 700b2.

Für beide Ausführungsvarianten gilt, dass der horizontale Arm 304a bzw. 304b des Pipettors 300a bzw. 300b an einem vertikalen Turm 303a bzw. 303b befestigt ist, der mittels einer verfahrbaren Aufnahme (nicht dargestellt) an einer in x-Richtung verlaufenden Schiene 111a bzw. 111b festgelegt ist.

Die beiden Pipettiernadeln 301a1, 301a2 bzw. 301b1, 301b2 sind mittels den in y-Richtung verfahrbaren Aufnahmen 305 links und rechts des Arms 304a bzw. 304b befestigt und können dadurch ungehindert aneinander vorbeifahren. Jede Aufnahme 305 weist einen nach unten ragenden Schienenabschnitt 306 auf, an welchem die Nadel in z-Richtung in die einzelnen Gefäße 921, 951a, 951b, 201 abgesenkt werden kann.

Die abrollbaren Energieketten in y-Richtung sind hier mit 311b1, 311b2 und jene in x-Richtung mit 310b bezeichnet.

Die beiden Pipettoren 300a und 300b können auch nebeneinander auf parallel zueinander ausgerichteten Schienen 111a, 111b eingesetzt werden.

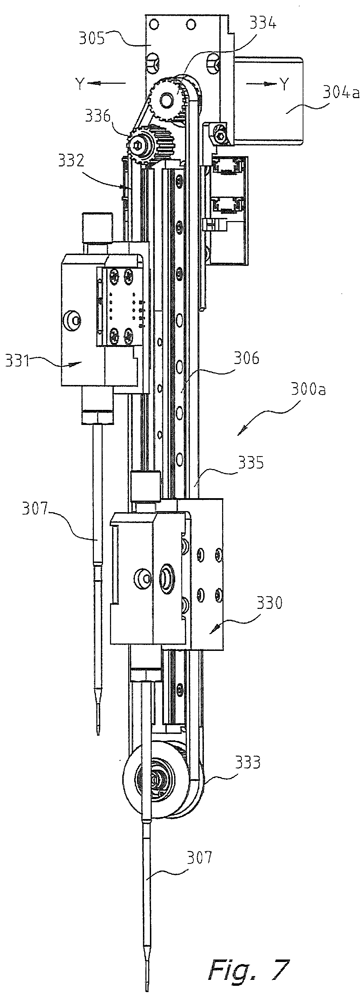

Gemäß einer in Fig. 7 dargestellten Ausführungsvariante kann anstelle einer einzelnen Pipettiernadel an zumindest einer Seite des Arms 304a des Pipettors 300a an der in y-Richtung verfahrbaren Aufnahme 305 eine Doppel-Pipettiernadel angeordnet sein, derart, dass zwei gemeinsam verfahrbare Pipettiernadeln 330, 331 über einen Hubmechanismus 332 verbunden sind, der beide Pipettiernadeln 330, 331 gegenläufig bzw. antiparallel in z-Richtung bewegt. Die beiden Hohlnadeln 307 können aus unterschiedlichen Materialien bestehen und unterschiedliche Innenvolumina aufweisen und stehen somit für unterschiedliche Aufgaben zur Verfügung, die ohne große Verfahrwege des Pipettors 300a erfüllt werden können.

Der nach unten ragende Schienenabschnitt 306 weist parallel angeordnete Schienen für die beiden Pipettiernadeln 330, 331 auf, wobei der Hubmechanismus 332 im Wesentlichen aus einem über Umlenkrollen 333, 334 geführten Zahnriemen 335 bestehen kann, der an den beiden Pipettiernadeln 330, 331 angreift und von einem Zahnriemenrad 336 angetrieben wird.

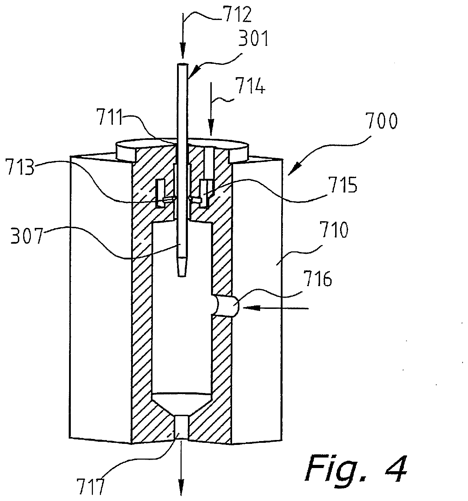

Fig. 4 zeigt in einer vergrößerten Schnittdarstellung den Aufbau einer mit dem allgemeinen Bezugszeichen 700 gekennzeichnete Nadelwascheinheit, die den im Wesentlichen baugleichen, an unterschiedlichen Positionen in den Fig. 2 und 3 dargestellten Nadelwascheinheiten (700a1, 700a2, 700b1, 700b2) entspricht, und eine mit dem allgemeinen Bezugszeichen 301 gekennzeichnete Pipettiernadel, die den im Wesentlichen baugleichen, an unterschiedlichen Positionen in den Fig. 2 und 3 dargestellten Pipettiernadeln (301a1, 301a2, 301b1, 301b2) entspricht. Die Hohlnadel 307 der Pipettiernadel 301 wird durch eine Aufnahmeöffnung 711 im Gehäuse 710 der Nadelwascheinheit 700 eingeführt, wobei gleichzeitig das Lumen der Nadel mit einer Waschlösung oder der Systemflüssigkeit aus dem Druckübertragungskanal 712 und die Außenseite der Nadel mit einer über seitliche Reinigungsdüsen 713 aus einer Ringkammer 715 zugeführten Spülflüssigkeit 714 gereinigt werden. Zur Innen- und Außenreinigung der Hohlnadel 307 durch wiederholtes Ansaugen und Ausstoßen von Waschlösung aus dem unteren Teil der Nadelwascheinheit, kann über einen radialen Einlass 716 Waschlösung vorgelegt werden, welche anschließend über eine Absaugöffnung 717 entleert werden kann.

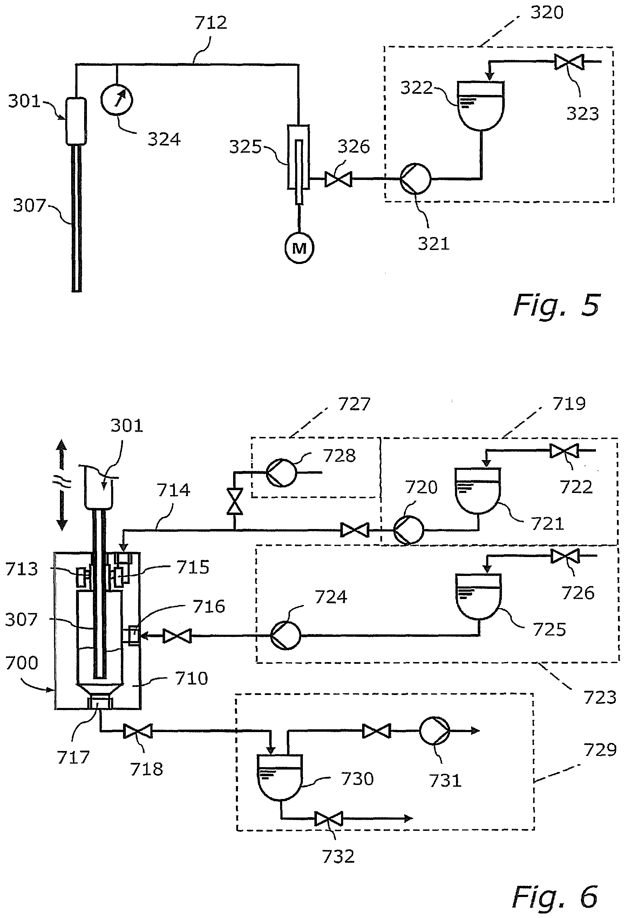

Fig. 5 zeigt das Fluidikschaltbild einer Pipettiernadel 301, deren Hohlnadel 307 über einen mit einer entgasten Flüssigkeit gefüllten Druckübertragungskanal 712 mit einer Präzisionskolbenpumpe 325, vorzugsweise einer von einem Schrittmotor angetriebenen Verdrängerpumpe (Dilutor), verbunden ist. Die Verdrängerpumpe verfügt seitlich über einen zusätzlichen Flüssigkeitsanschluss, der über ein Magnetventil 326 an eine Bereitstellungseinheit 320 für eine Systemflüssigkeit angeschlossen ist, die über eine Spülpumpe 321 aus einem Vorratsgefäß 322 z.B. entgastes, deionisiertes Wasser fördert, welches über ein Magnetventil 323 nachfüllbar oder unter Druck setzbar ist.

Zur Detektion von Störungen verfügt der Druckübertragungskanal 712 in der Nähe der Pipettiernadel 301 über einen weiteren Anschluss zu einem Drucksensor 324, der mit einer hier nicht dargestellten Auswerte- und Kontrolleinheit, beispielsweise zur Detektion von Verstopfungen der Hohlnadel 307, verbunden ist.

### Beschreibung eines Pipettiervorgangs

Für den Transfer einer definierten Flüssigkeitsmenge, beispielsweise mit der Pipettiernadel 301a2 gemäß Fig. 2 wird diese zunächst in horizontaler Richtung zu einem ersten Gefäß bewegt, 5 µL Luft (Spacer) in die Spitze der Hohlnadel 307 eingesaugt und die Pipettiernadel 301a2 in Richtung der Flüssigkeitsoberfläche des ersten Gefäßes abgesenkt. Um eine ausreichende, aber nicht zu große Eintauchtiefe der Pipettiernadel 301a2 zu gewährleisten, wird die Abwärtsbewegung der Hohlnadel 307 in definierter Eintauchtiefe durch ein Signal einer Flüssigkeitsoberflächen-Detektionsvorrichtung (nicht dargestellt), beispielsweise mit kapazitivem Detektionsprinzip, gestoppt. Zur Aspiration einer definierten Menge an Flüssigkeit mit hoher Genauigkeit im µL Bereich wird nun durch Abwärtsbewegung des Arbeitskolbens der in Fig. 5 dargestellten Verdrängerpumpe (Dilutor) ein Unterdruck in der Hohlnadel 307 der Pipettiernadel 301a2 erzeugt, welcher die Aspiration eines entsprechenden Flüssigkeitsvolumens aus einem ersten Gefäß bewirkt. Die Pipettiernadel 301a2 wird nun samt der aspirierten Flüssigkeit, welche durch eine Trennluftblase (Spacer) von der Systemflüssigkeit getrennt ist, zu einem zweiten Gefäß bewegt, wobei der Prozess nun in umgekehrter Richtung abläuft und die aspirierte Flüssigkeit über die Spitze der Hohlnadel 307 in das zweite Gefäß abgegeben wird. Zumindest zwischen zwei Pipettiervorgängen mit unterschiedlichen zu pipettierenden Flüssigkeiten erfolgt stets eine Innen- und Außenreinigung der Pipettiernadel 301a2 in deren Nadelwascheinheit 700a2. Während des Pipettiervorgangs mit der Pipettiernadel 301a2 kann die Pipettiernadel 301a1 in deren Nadelwascheinheit 700a1 gereinigt und getrocknet werden.

Fig. 6 zeigt das Fluidikschaltbild einer Nadelwascheinheit 700 gemäß Fig. 4, mit darin abgesenkter Hohlnadel 307 der Pipettiernadel 301. Das Gehäuse 710 der Nadelwascheinheit verfügt im oberen Bereich über eine konzentrisch umlaufende Ringkammer 715, die als Medienzuführung für mehrere innenliegende, konzentrisch ausgerichtete Reinigungsdüsen 713 fungiert, und die jeweils über Magnetventile mit einer Bereitstellungseinheit 719 für eine Spülflüssigkeit (beispielsweise deionisiertes Wasser), und eine Bereitstellungseinheit 727 für Trockenluft verbunden ist.

Ein in der Mitte der Höhe des Gehäuses 710 der Nadelwascheinheit 700 radial angeordneter Einlass 716 ist ebenfalls mit einem Magnetventil verbunden, und dient ausschließlich der Zufuhr von tensidhaltiger Waschlösung aus einer Bereitstellungseinheit 723.

Die Bereitstellungseinheiten 719 für eine Spülflüssigkeit und 723 für eine Waschlösung verfügen jeweils über eine Pumpe 720, 724, die Spülflüssigkeit bzw. eine tensidhaltige Waschlösung aus den jeweiligen Vorratsbehältern 721, 725 fördern, die jeweils über ein Magnetventil 722, 726 nachfüllbar, oder unter Druck setzbar sind. Die Bereitstellungseinheit 727 für Luft weist eine Luftpumpe 728 zur Bereitstellung komprimierter Luft und ggf. eine Trocknungsvorlage (nicht dargestellt) auf.

Die am Boden der Nadelwascheinheit 700 befindliche Absaugöffnung 717 ist über ein Magnetventil 718 mit der unter Unterdruck stehenden Abwassersammeleinheit 729 verbunden, welche im Wesentlichen aus einem Sammelbehälter 730 besteht, der im Gasraum über der Flüssigkeit über einen Anschluss zu einer Vakuumpumpe 731 verfügt, die über ein Magnetventil mit dem Sammelbehälter 730 verbunden ist. Die gesammelten Abwässer können über ein Magnetventil 732 am Boden des Sammelbehälters 730 abgeführt werden und einer weiteren Abwasserbehandlung zugeführt werden.

### Beschreibung eines Nadelwaschvorgangs

In einem typischen Waschprozess der Pipettiernadel 301 (gleiches gilt für alle Pipettiernadeln 301a1, 301a2, 301b1, 301b2) wird diese zunächst horizontal zur Nadelwascheinheit 700 bewegt und in die untere Halteposition der Waschkammer abgesenkt. Alle bei der Reinigung der Pipettiernadel 301 anfallenden Abwässer werden über die am Boden befindliche Absaugöffnung 717 abgesaugt, gesammelt, und gegebenenfalls nachbehandelt. Anschließend werden über die in Fig. 5 dargestellte Präzisionskolbenpumpe 325 der Pipettiernadel 301 zunächst in und an der Nadelspitze befindliche Restmengen der zuletzt pipettierten Flüssigkeit entleert und abgesaugt. Schließlich wird die abgesenkte Pipettiernadel 301 von hinten mittels der in Fig. 5 dargestellten Bereitstellungseinheit 320 für Systemflüssigkeit gespült.

In einem nächsten Schritt wird (bei geschlossenem Magnetventil 718 an der Absaugöffnung 717) durch den Einlass 716 im Gehäuse 710 der Nadelwascheinheit 700 ein definiertes Volumen tensidhaltiger Waschlösung eingeleitet, wodurch sich die Kammer im unteren Teil mit einem definierten Pegel an Waschlösung füllt. Die Hohlnadel 307 der Pipettiernadel 301 wird so weit abgesenkt, dass durch das Eintauchen in die Waschlösung eine Außenbenetzung der Nadel, und durch Aufsaugen der Waschlösung in das Nadelinnere eine Innenbenetzung der Hohlnadel 307 erfolgen kann. Anschließend wird die aspirierte Waschlösung wieder ausgestoßen, wobei der Prozess des Aufsaugens und Ausstoßens der Waschlösung mehrfach wiederholt werden kann, um die Reinigungswirkung zu verbessern.

In einem letzten Schritt wird die kontaminierte Waschlösung abgesaugt und das Innere der Hohlnadel 307 mit Systemwasser (z.B. entgastes, deionisiertes Wasser) gespült, während die Außenseite der Hohlnadel 307 gleichzeitig durch die obenliegenden, konzentrisch angeordneten Reinigungsdüsen 713 mit Spülflüssigkeit aus der Bereitstellungseinheit 719 gespült wird, wobei die Spitze der Hohlnadel 307 von unten nach oben bewegt wird, um die Reinigungswirkung zu verbessern.

Nach Beendigung der simultanen Innen- und Außenspülung wird die Hohlnadel 307 erneut in die untere Halteposition bewegt, die Medienzuführung der Reinigungsdüsen 713 auf die Bereitstellungseinheit 727 für komprimierte Luft umgeschaltet und die Spitze der Hohlnadel 307 erneut von unten nach oben bewegt, wodurch anhaftende Wassertropfen von der Nadeloberfläche rasch entfernt werden können. Die Pipettiernadel 301 kann nun aus der Nadelwascheinheit 700 bewegt werden, und ist nach der Aspiration eines Trennluft-Spacers (5 µL) erneut für eine Pipettierung bereit.

### Beispiele:

Die automatische Pipettiervorrichtung gemäß Fig. 2 arbeitet beispielsweise wie folgt:
Im Vorfeld einer Pipettieraufgabe stellt die Steuereinheit (nicht dargestellt) der Pipettiervorrichtung aus bekannten bzw. vorher eingegebenen Informationen alle für den Transfer der Proben und Reagenzien benötigten Daten zusammen (Transferprotokoll, Positionen der Gefäße 921, 951a, 951b mit den Analysenproben und mit den (beispielsweise für eine nachfolgende Analyse) erforderlichen Reagenzien, Positionen von freien Aufnahmegefäßen 201, etc.).

Der Pipettor 300a wird zunächst in horizontaler x-Richtung auf die Höhe eines von der Steuereinheit ausgewählten Proben- oder Reagenziengefäßes 921, 951a, 951b verfahren.

Danach bewegt sich die erste Pipettiernadel 301a1 des Pipettors 300a entlang einer horizontalen, auf die x-Richtung im Wesentlichen normal stehenden y-Richtung zum ausgewählten Proben- oder Reagenziengefäß 921, 951a, 951b, um eine vorbestimmte Menge einer flüssigen Probe oder Reagenz aus einem Proben- oder Reagenziengefäß in das Aufnahmegefäß 201 der Pipettiervorrichtung zu transferieren.

Die ersten Pipettiernadel 301a1 wird nun in z-Richtung in das Proben- oder Reagenziengefäß 921, 951a, 951b abgesenkt, wobei eine von der Steuereinrichtung vorgegebene Menge an Proben- oder Reagenzflüssigkeit in die Hohlnadel 307 der Pipettiernadel 301a1 eingesaugt wird.

Die erste Pipettiernadel 301a1 wird anschließend zur Position des Aufnahmegefäßes 201 verfahren, wobei sich der Pipettor 300a in x-Richtung und die Pipettiernadel - geführt am horizontalen Arm 304a des Pipettors - gleichzeitig in y-Richtung bewegt.

Nach dem Erreichen der Position des Aufnahmegefäßes 201 und einer Absenkung der Pipettiernadel 301a1 erfolgt die Abgabe der vorbestimmten Menge an Proben- oder Reagenzienflüssigkeit in das Aufnahmegefäß 201.

Während aller oben beschriebenen Aktionen der ersten Pipettiernadel 301a1 kann die zweite Pipettiernadel 301a2 desselben Pipettors 300a unabhängig von der aktuellen Stellung bzw. Position der ersten Pipettiernadel 301a1 in y-Richtung verfahren werden und zur gleichzeitigen Durchführung zusätzlicher Pipettieraufgaben herangezogen werden.

Die zweite Pipettiernadel 301a2 kann unabhängig von der ersten Pipettiernadel Proben oder Reagenzien pipettieren oder auch in der Nadelwascheinheit 700a2 gewaschen werden.

## Patentansprüche

1. Automatische Pipettiervorrichtung geeignet für den Proben- und/oder Reagenzientransfer aus Proben- (921) und/oder Reagenziengefäßen (951a, 951b) in zumindest ein Aufnahmegefäß (201), beispielsweise eines Analysators der zur Analyse von flüssigen Proben bestimmt ist, wobei ein beweglicher Pipettor (300a; 300b) der Pipettiervorrichtung entlang einer x-Richtung verfahrbar ausgeführt ist und zumindest eine erste Pipettiernadel (301a1, 301b1) aufweist, die längs eines horizontalen Arms (304a, 304b) des Pipettors (300a; 300b) entlang einer auf die x-Richtung im Wesentlichen normal stehenden y-Richtung verfahrbar und in die einzelnen Gefäße in z-Richtung absenkbar ausgeführt ist, **dadurch gekennzeichnet, dass** der horizontale Arm (304a; 304b) des verfahrbaren Pipettors (300a; 300b) an einem vertikalen Turm (303a; 303b) befestigt ist, der mittels einer verfahrbaren Aufnahme an einer in x-Richtung verlaufenden Schiene (111a; 111b) verfahrbar befestigt ist, wobei der horizontale Arm (304a; 304b) zumindest eine zweite Pipettiernadel (301a2; 301b2) aufweist, die unabhängig von der aktuellen Stellung der ersten Pipettiernadel (301a1, 301b1) aneinander vorbei verfahrbar und in die einzelnen Gefäße (921, 951a, 951b, 201) absenkbar ausgeführt ist und wobei die beiden unabhängig voneinander verfahrbaren Pipettiernadeln (301a1, 301a2, 301b1, 301b2) an gegenüber liegenden Längsseiten bzw. Seitenflächen des Arms (304a; 304b) des Pipettors (300a; 300b) angeordnet sind.

2. Pipettiervorrichtung nach Anspruch 1, **dadurch gekennzeichnet, dass** der Pipettor (300a; 300b) der Pipettiervorrichtung unterschiedliche Pipettiernadeln (301a1, 301a2, 301b1, 301b2) aufweist, wobei die Pipettiernadeln (301a1, 301a2, 301b1, 301b2) jeweils Hohlnadeln (307) aufweisen, die sich in der Art der verwendeten Materialien, den Innenvolumina und/oder der Geometrie der Hohlnadeln (307) unterscheiden.

3. Pipettiervorrichtung nach Anspruch 1 oder 2, **dadurch gekennzeichnet, dass** der Pipettor (300a; 300b) der Pipettiervorrichtung zumindest eine mit dem Pipettor (300a; 300b) verfahrbare Nadelwascheinheit (700a1, 700a2, 700b1, 700b2) für die erste und die zweite Pipettiernadel (301a1, 301a2, 301b1, 301b2) aufweist.

4. Pipettiervorrichtung nach einem der Ansprüche 1 bis 3, **dadurch gekennzeichnet, dass** die erste und die zweite Pipettiernadel (301a1, 301a2, 301b1, 301b2) zumindest in Teilbereichen des Arms (304a; 304b) des Pipettors (300a; 300b) im Wesentlichen parallel zueinander verfahrbar ausgeführt sind.

5. Pipettiervorrichtung nach einem der Ansprüche 1 bis 4, **dadurch gekennzeichnet, dass** an zumindest einer Seite des Arms (304a, 304b) des Pipettors (300a; 300b) zwei gemeinsam verfahrbare Pipettiernadeln (330, 331) derart über einen Hubmechanismus (332) verbunden sind, dass die beiden Pipettiernadeln (330, 331) in z-Richtung gegenläufig (antiparallel) bewegbar sind.

6. Pipettiervorrichtung nach einem der Ansprüche 1 bis 5, **dadurch gekennzeichnet, dass** der Pipettor (300a) mit seinem vertikalen Turm (303a) und dem horizontalen Arm (304a) eine im Wesentlichen L-förmige Grundstruktur aufweist.

7. Pipettiervorrichtung nacheinem der Ansprüche 1 bis 5, **dadurch gekennzeichnet, dass** der Pipettor (300b) mit seinem vertikalen Turm (303b) und dem horizontalen Arm (304b) eine im Wesentlichen T-förmige Grundstruktur aufweist.

8. Verfahren zum Transferieren von flüssigen Proben und/oder Reagenzien aus Proben- (921) und/oder Reagenziengefäßen (951a, 951b) in zumindest ein Aufnahmegefäß (201) einer automatischen Pipettiervorrichtung, mit einem entlang einer ersten Richtung (x) horizontal verfahrbaren Pipettor (300a, 300b) unter Verwendung der Vorrichtung von Anspruch 1, **gekennzeichnet durch** folgende Schritte:
a) Verfahren einer ersten Pipettiernadel (301a1, 301b1) des Pipettors (300a, 300b) entlang einer horizontalen, auf die erste Richtung (x) im Wesentlichen normal stehenden zweiten Richtung (y) zum Transferieren einer vorbestimmten Menge einer flüssigen Probe oder Reagenz aus einem Proben- (921) oder Reagenziengefäß (951a, 951b) in das Aufnahmegefäß (201);
b) Absenken der ersten Pipettiernadel (301a1, 301b1) in das Proben- (921) oder Reagenziengefäß (951a, 951b),
c) Aufnehmen einer vorbestimmten Menge an Proben- oder Reagenzflüssigkeit und Verfahren der ersten Pipettiernadel (301a1, 301b1) zur Position des Aufnahmegefäßes (201);
d) Abgabe der vorbestimmten Menge an Proben- oder Reagenzflüssigkeit in das Aufnahmegefäß (201); und
e) Verfahren einer zweiten Pipettiernadel (301a2, 301b2) desselben Pipettors (300a, 300b) in die zweite Richtung (y), unabhängig von der aktuellen Stellung der ersten Pipettiernadel (301a1, 301a2) zur gleichzeitigen Durchführung zusätzlicher Pipettieraufgaben.

## Claims

1. Automatic pipetting device, suitable for transferring samples and/or reagents from sample vessels (921) and/or reagent vessels (951a, 951b) into at least one receiving vessel (201), for example of an analyzer designed for analyzing liquid samples, wherein a pipettor (300a; 300b) of the pipetting device is designed to be movable along a first direction (x) and has at least one first pipetting needle (301a1, 301b1) which is designed to be movable along an arm (304a, 304b) of the pipettor (300a; 300b) along a y-direction, substantially normal to the x-direction, and is designed to be lowerable into the individual vessels along a z-direction, **characterised in that** the horizontal arm (304a; 304b) of the movable pipettor (300a; 300b) is attached to a vertical tower (303a; 303b) which is fastened by means of a movable mount to a rail (111a; 111b) extending in the x-direction, wherein the horizontal arm (304a; 304b) has at least one second pipetting needle (301a2; 301b2) which, regardless of the current position of the first pipetting needle (301a1, 301b1), is movable past the first pipetting needle and is lowerable into the individual vessels (921, 951a, 951b, 201), and wherein the two independently movable pipetting needles (301a1, 301a2, 301b1, 301b2) are arranged on opposite longitudinal sides or side faces of the arm (304a; 304b) of the pipettor (300a; 300b).

2. Pipetting device according to claim 1, **characterised in that** the pipettor (300a; 300b) of the pipetting device has different pipetting needles (301a1, 301a2, 301b1, 301b2), wherein the pipetting needles (301a1, 301a2, 301b1, 301b2) each have hollow needles (307) which differ in the type of materials used, the internal volumes and/or the geometry of the hollow needles (307).

3. Pipetting device according to claim 1 or 2, **characterised in that** the pipettor (300a; 300b) of the pipetting device comprises at least one needle washing unit (700a1, 700a2, 700b1, 700b2) for the first and the second pipetting needles (301a1, 301a2, 301b1, 301b2), which needle washing unit is movable with the pipettor (300a; 300b).

4. Pipetting device according to any one of claims 1 to 3, **characterised in that** the first and the second pipetting needles (301a1, 301a2, 301b1, 301b2) are designed to be movable substantially parallel to one another at least in partial regions of the arm (304a; 304b) of the pipettor (300a; 300b).

5. Pipetting device according to any one of claims 1 to 4, **characterised in that,** on at least one side of the arm (304a, 304b) of the pipettor (300a; 300b), two jointly movable pipetting needles (330, 331) are connected via a lifting mechanism (332) such that the two pipetting needles (330, 331) can be moved in opposite directions (in an antiparallel manner) in the z-direction.

6. Pipetting device according to any one of claims 1 to 5, **characterised in that** the pipettor (300a) with its vertical tower (303a) and the horizontal arm (304a) has a substantially L-shaped basic structure.

7. Pipetting device according to any one of claims 1 to 5, **characterised in that** the pipettor (300b) with its vertical tower (303b) and the horizontal arm (304b) has a substantially T-shaped basic structure.

8. Method for transferring liquid samples and/or reagents from sample vessels (921) and/or reagent vessels (951a, 951b) into at least one receiving vessel (201) of an automatic pipetting device, using a pipettor (300a, 300b) which is movable horizontally along a first direction (x), utilizing the device of claim 1, **characterised by** the following steps:
a) moving a first pipetting needle (301a1, 301b1) of the pipettor (300a, 300b) along a horizontal second direction (y), substantially normal to the first direction (x), in order to transfer a predetermined quantity of a liquid sample or reagent from a sample vessel (921) or reagent vessel (951a, 951b) into the receiving vessel (201);
b) lowering the first pipetting needle (301a1, 301b1) into the sample vessel (921) or reagent vessel (951a, 951b),
c) taking up a predetermined quantity of sample liquid or reagent liquid and moving the first pipetting needle (301a1, 301b1) to the position of the receiving vessel (201);
d) dispensing the predetermined quantity of sample liquid or reagent liquid into the receiving vessel (201); and
e) moving a second pipetting needle (301a2, 301b2) of the same pipettor (300a, 300b) in the second direction (y), regardless of the current position of the first pipetting needle (301a1, 301a2), in order to simultaneously carry out additional pipetting tasks.

## Revendications

1. Dispositif de pipetage automatique propre au transfert d'échantillons et/ou de réactifs de récipients (921) d'échantillons et/ou de récipients (951a, 951b) de réactifs à au moins un récipient (201) de réception, par exemple à un analyseur qui est destiné à l'analyse d'échantillons liquides, dans lequel un pipeteur (300a ; 300b) mobile du dispositif de pipetage est réalisé de manière à pouvoir être déplacé suivant une direction x et a au moins une première aiguille (301a1, 301b1) de pipetage, qui est réalisée de manière à pouvoir être déplacée le long d'un bras (304a, 304b) horizontal du pipeteur (300a ; 300b) suivant une direction y sensiblement normale à la direction x et à pouvoir être abaissée dans la direction z dans les divers récipients, **caractérisé en ce que** le bras (304a ; 304b) horizontal du pipeteur (300a ; 300b) pouvant être déplacé est fixé à une tour (303a ; 303b) verticale qui, au moyen d'un logement pouvant être déplacé, est fixée de manière à pouvoir être déplacée à un rail (111a ; 111b) s'étendant dans la direction x, dans lequel le bras (304a ; 304b) horizontal a au moins une deuxième aiguille (301a2 ; 301b2) de pipetage, qui indépendamment de la position en cours de la première aiguille (301a1, 301b1) de pipetage est réalisée de manière à pouvoir être déplacée en passant l'une devant l'autre et à pouvoir être abaissée dans les divers récipients (921, 951a, 951b, 201) et dans lequel les deux aiguilles (301a1, 301a2, 301b1, 301b2) de pipetage pouvant être déplacées indépendamment l'une de l'autre sont disposées sur des côtés longitudinaux ou des faces latérales opposées du bras (304a ; 304b) du pipeteur (300a ; 300b).

2. Dispositif de pipetage suivant la revendication 1, **caractérisé en ce que** le pipeteur (300a ; 300b) du dispositif de pipetage a des aiguilles (301a1, 301a2, 301b1, 301b2) de pipetage différentes, dans lequel les aiguilles (301a1, 301a2, 301b1, 301b2) de pipetage ont chacune des aiguilles (307) creuses, qui se distinguent dans le type des matériaux utilisés les volumes intérieurs et/ou la géométrie des aiguilles (307) creuses.

3. Dispositif de pipetage suivant la revendication 1 ou 2, **caractérisé en ce que** le pipeteur (300a ; 300b) du dispositif de pipetage a au moins une unité (700a1, 700a2, 700b1, 700b2), pouvant être déplacée avec le pipeteur (300a ; 300b), de lavage de la première et de la deuxième aiguille (301a1, 301a2, 301b1, 301b2) de pipetage.

4. Dispositif de pipetage suivant l'une des revendications 1 à 3, **caractérisé** entre la première et la deuxième aiguilles (301a1, 301a2, 301b1, 301b2) de pipetage sont au moins dans des zones partielles du bras (304a ; 304b) du pipeteur (300a ; 300b) réalisées de manière à pouvoir être déplacées l'une par rapport à l'autre sensiblement parallèlement.

5. Dispositif de pipetage suivant l'une des revendications 1 à 4, **caractérisé en ce qu'**au moins d'un côté du bras (304a, 304b) du pipeteur (300a ; 300b) deux aiguilles (330, 331) de pipetage pouvant être déplacées conjointement sont reliées par un mécanisme (332) de levage de manière à pouvoir déplacer en sens contraire (antiparallèlement) dans la direction z des deux aiguilles (330, 331) de pipetage.

6. Dispositif de pipetage suivant l'une des revendications 1 à 5, **caractérisé en ce que** le pipeteur (300a) a par sa tour (303a) verticale et le bras (304a) horizontal une structure de base sensiblement en forme de L.

7. Dispositif de pipetage suivant l'une des revendications 1 à 5, **caractérisé en ce que** le pipeteur (300b) a par sa tour (303b) verticale et le bras (304b) horizontal une structure de base sensiblement en forme de T.

8. Procédé de transfert d'échantillons et/ou de réactifs liquides, de récipients (921) d'échantillons et/ou de récipients (951a, 951b) de réactifs à au moins un récipient (201) de réception d'un dispositif de pipetage automatique par un pipeteur (300a, 300b) pouvant se déplacer horizontalement suivant une première direction x en utilisant le dispositif de la revendication 1, **caractérisé par** les stades suivants :
a) déplacement d'une première aiguille (301a1, 301b1) de pipetage du pipeteur (300a, 300b) suivant une deuxième direction (y) horizontale sensiblement normale à la première direction (x) pour le transfert d'une quantité déterminée à l'avance d'un échantillon ou d'un réactif liquide d'un récipient (921) d'échantillon ou d'un récipient (951a, 951b) de réactif au récipient (201) de réception ;
b) abaissement de la première aiguille (301a1, 301b1) de pipetage dans le récipient (921) d'échantillon ou le récipient (951a, 951b) de réactif,
c) prise d'une quantité déterminée à l'avance de liquide d'échantillon ou de liquide de réactifs et déplacement de la première aiguille (301a1, 301b1) de pipetage à la position de récipient (201) de réception ;
d) cession de la quantité déterminée à l'avance de liquides d'échantillon ou de réactif au récipient (201) de réception ; et
e) déplacement d'une deuxième aiguille (301a2, 301b2) de pipetage du même pipeteur (300a, 300b) dans la deuxième direction (y), indépendamment de la position en cours de la première aiguille (301a1, 301a2) de pipetage pour effectuer simultanément des taches supplémentaires de pipetage.
